# EUROPÄISCHE PATENTSCHRIFT

(11) **EP 3 175 944 B1**
(45) Veröffentlichungstag und Bekanntmachung des Hinweises auf die Patenterteilung: **18.03.2020**
(21) Anmeldenummer: 16202241.2
(22) Anmeldetag: 05.12.2016
(51) Int. Cl.: B23C 5/08, B23C 5/22, B23D 61/06

(54) **SCHEIBENWERKZEUG UND SCHNEIDEINSATZ DAFÜR**
DISK TOOL AND CUTTING INSERT THEREFOR
OUTIL DISQUE ET INSERT DE COUPE ASSOCIÉE

(30) Priorität: 03.12.2015 DE 102015121058
(43) Veröffentlichungstag der Anmeldung: 07.06.2017
(73) Patentinhaber: Gebr. Lennartz GmbH & Co. KG, 42855 Remscheid (DE)
(72) Erfinder: Jonas, Oliver, 42899 Remscheid (DE)
(74) Vertreter: Lippert Stachow Patentanwälte Rechtsanwälte

(56) Entgegenhaltungen:
- AT-U1- 11 189
- DE-A1-102007 011 395
- DE-U1-202005 006 762
- US-A1- 2013 051 938

## Beschreibung

Die Erfindung betrifft ein Scheibenwerkzeug, insbesondere ein Scheibenfräser oder eine Scheibensäge wie sie beispielsweise zur Bearbeitung von Metallteilen wie Metallrohren oder Metallstäben verwendbar sind.

Derartige Werkzeuge weisen einen scheibenförmigen Grundkörper auf, der im Bereich seiner Mantelfläche eine Mehrzahl von umfänglich beabstandeten, etwa L-förmig ausgesparten Sitzen aufweist. Die Sitze weisen jeweils eine an einem Schenkel des L-förmigen Sitzes angeordnete Sitzauflage und eine, an dem anderen Schenkel des L-förmigen Sitzes angeordnetem Sitzanlage zur formschlüssigen Aufnahme eines jeweiligen Schneideinsatzes mit quaderförmiger oder prismatischer Grundform auf. Ein Schneideinsatz weist dabei zumindest eine Schneidkante und eine untere Kontur auf, die mit zumindest einer Sitzauflagefläche des Sitzes zusammenwirkt und eine stirnseitige Kontur, die mit zumindest einer Sitzanlagefläche des Sitzes zusammenwirkt zum formschlüssigen Halten des Schneideinsatzes im jeweiligen Sitz, so dass u.U. axial auf den Schneideinsatz auftretende Schneidkräfte vom jeweiligen Sitz aufnehmbar sind. Dabei sind die Sitzanlagefläche des Sitzes und eine stirnseitige Anlagefläche der stirnseitigen Kontur des Schneideinsatzes im Bereich der gegenseitigen Anlage als ebene Flächen ausgebildet. Der jeweilige Schneideinsatz weist ferner eine zwischen seiner unteren Kontur und einer zu dieser gegenüberliegenden oberen Fläche verlaufende Durchgangsbohrung auf zur Aufnahme eines Befestigungsbolzen, der sich insofern durch den Schneideinsatz erstreckt und in eine zugeordnete Gewindebohrung im scheibenförmigen Grundkörper lösbar eingeschraubt ist.

Der Einsatz derartiger Scheibenwerkzeuge bietet sich insbesondere dann an, wenn Metallhalbzeuge bei hohen Schnitt- oder Fräsgeschwindigkeiten und/oder hohen Vorschubgeschwindigkeiten unter Realisierung langer Standzeiten zu bearbeiten sind. Dabei können die Schneideinsätze als Hartmetallelemente ausgebildet sein, die wie beschrieben austauschbar am Scheibenwerkzeug durch Verschrauben befestigbar sind. Zur Aufnahme von axial, d. h. in Querrichtung zum scheibenförmigen Grundkörper auftretenden Betriebskräfte und als Montagehilfe kann bei den herkömmlichen Scheibenwerkzeugen eine Randerhebung zur Begrenzung der jeweiligen Sitzauflagefläche vorgesehen sein, welche mit einer zugeordneten unteren Kontur des Schneideinsatzes zusammenwirkt. Gattungsgemäße Scheibenwerkzeuge sind in der Gebrauchsmusterschrift DE 202005006762 U1 offenbart.

Es hat sich herausgestellt, dass beim Betrieb der gattungsgemäßen Scheibenwerkzeuge nach einiger Zeit aufgrund des Auftretens von unsymmetrischem Verschleiß und/oder unsymmetrischen Materialausbrüchen im Bereich der Schneidkante immer höhere Querkräfte auftreten, die letztlich oder mitunter zum vollständigen Bruch des jeweiligen Schneideinsatzes führen können.

Insofern liegt der Erfindung die Aufgabe zugrunde, dass gattungsgemäße Scheibenwerkzeug soweit zu verbessern, dass die Standzeit noch weiter erhöht wird.

Überraschenderweise löst die Erfindung diese Aufgabe mit einem Scheibenwerkzeug mit den Merkmalen von Anspruch 1. Das erfindungsgemäße Scheibenwerkzeug zeichnet sich dadurch aus, dass der jeweilige Schneideinsatz im Bereich seiner stirnseitigen Kontur mit dem Sitz im Bereich der Sitzanlagefläche in Richtung zur Achse der Gewindebohrung des Grundkörpers und parallel zur Scheibenebene einen Hinterschnitt bildet.

Durch die beschriebene Gestaltung der gegenseitigen Anlage von Schneideinsatz und Sitz im Bereich der Sitzanlagefläche kann der Kraftfluss vom jeweiligen Schneideinsatz auf den scheibenförmigen Grundkörper weiter verbessert werden, so dass durch das Verhindern des Aushebelns des Schneideinsatzes aus dem Sitz aufgrund des beschriebenen Hinterschnittes die Standzeit trotz der eventuell im Betrieb auftretenden Materialausbrüchen oder eines unsymmetrischen Verschleißes weiter erhöht wird. Die Gefahr eines vollständigen Ausfalls bzw. Durchbruchs des Schneideinsatzes kann mit der erfindungsgemäßen Gestaltung des Scheibenwerkzeuges wesentlich erniedrigt werden. Dies erreicht die Erfindung dadurch, dass der Schneideinsatz aus seinem Sitz nicht allein durch Bewegung des Schneideinsatzes parallel zur Achse der Gewindebohrung bewegt werden kann, sondern aufgrund des Hinterschnitts zwischen dem Schneideinsatz und des Sitzes im Bereich von dessen Sitzanlagefläche nur durch eine zusätzliche Bewegung auch in eine transversale Richtung zum scheibenförmigen Grundkörper, insbesondere innerhalb der Scheibenebene des Grundkörpers.

Weitere erfindungsgemäße Merkmale sind in der allgemeinen Beschreibung, der Figurenbeschreibung sowie den Figuren angegeben.

Die Gewindebohrung im scheibenförmigen Grundkörper kann zu dessen Radiusvektor je nach Ausführungsform in der Ebene des scheibenförmigen Grundkörpers am radialen außenliegenden Ende der Gewindebohrung in einem vorgegebenen Winkel verlaufen, der zweckmäßigerweise aus einem Intervall zwischen -30° und +30 , insbesondere zwischen -14° und +14° ausgewählt sein kann. Grundsätzlich kann dabei vorgesehen sein, dass alle L-förmigen Sitze am scheibenförmigen Grundkörper eine Gewindebohrung aufweisen, die zum jeweiligen Radius des Grundkörpers den gleichen Winkel besitzen. In einer besonderen Ausführungsform können die Gewindebohrungen umfänglich benachbarte Sitze einen unterschiedlichen Winkel zum Radius des Grundkörpers aufweisen, beispielsweise um unterschiedlich gestaltete Schneideinsätze am scheibenförmigen Grundkörper optimiert anzubringen.

Zur Bereitstellung des angegebenen Hinterschnitts zwischen dem Schneideinsatz und dem Sitz im Bereich der Sitzanlagefläche kann vorgesehen sein, dass eine Parallele zur Achse der Gewindebohrung im Grundkörper mit der Sitzanlagefläche einen Winkel zwischen 4° und 14° bildet, insbesondere in Bezug auf die Anlage der Parallele am radial äußeren Rand der Sitzanlagefläche. Besonders zweckmäßig ist der Winkel so eingestellt, dass er in einem Bereich zwischen 6° bis 8° liegt.

Es kann erfindungsgemäß vorgesehen sein, dass die Gewindebohrung einen Winkel zu einem durch das radiale äußere Ende der Gewindebohrung verlaufenden Radiusvektor des scheibenförmigen Grundkörpers aufweist, der zwischen 4° und 14°, insbesondere zwischen 6° und 8° beträgt.

Vorzugsweise kann vorgesehen sein, dass die Achse der in der Ebene des scheibenförmigen Grundkörpers verlaufenden Gewindebohrung zu einem Radiusvektor, der am drehrichtungsseitigen Ende des Sitzes anliegt bzw. durch eine Schneidkante eines vom Sitz aufgenommenen Schneideinsatzes verläuft, einen vorgegebenen Winkel aufweist, der je nach Ausführungsform zwischen 4° und 30° beträgt, insbesondere zwischen 4° und 12°, besonders zweckmäßig etwa 8° beträgt.

Um einen optimalen Kraftfluss zwischen Schneideinsatz und Sitz auf den scheibenförmigen Grundkörper bereitzustellen kann zweckmäßigerweise vorgesehen sein, dass die untere Kontur des jeweiligen Schneideinsatzes im Querschnitt senkrecht zur Scheibenebene V- bzw. U-förmig zur Ausbildung zumindest einer unteren Anlagefläche ausgebildet ist. Eine solche V-bzw. U-förmige Kontur bietet insbesondere die Möglichkeit mehrere Anlageflächen vorzusehen, die zueinander winkelig angeordnet sein können, zur Verbesserung des Sitzes des Schneideinsatzes am scheibenförmigen Grundkörper.

Es kann vorgesehen sein, dass die untere Kontur des Schneideinsatzes zwei ebene Keilflächen als untere Anlageflächen umfasst, deren Ebenen sich in einer Linie schneiden, die hinter einer unteren Begrenzungsfläche des jeweiligen Schneideinsatzes liegt. Durch diese Maßnahme kann erreicht werden, dass der zum Schneideinsatz komplementär ausgebildete Sitz bzw. die entsprechende Sitzanlagefläche auch Querkräfte, d. h. Betriebskräfte in axialer Richtung zum scheibenförmigen Grundkörper aufnehmen kann.

Zweckmäßigerweise kann vorgesehen sein, dass die Sitzanlage des Sitzes zur Aufnahme des jeweiligen Schneideinsatzes im Querschnitt senkrecht zur Scheibenebene eine Randerhebung aufweist. Diese Randerhebung kann dabei auch innenliegende Schrägflächen bilden, die mit komplementären Flächen der unteren Kontur des Schneideinsatzes zum Halten des Schneideinsatzes im Sitz und zum Übertragen der Betriebskräfte in den scheibenförmigen Grundkörper zusammenwirken.

In einer anderen Ausführungsform kann auch vorgesehen sein, dass die untere Kontur des Schneideinsatzes Randerhebungen aufweist, so dass der Schneideinsatz die komplementär ausgebildete Sitzauflage des L-förmigen Sitzes im Randbereich übergreift und somit in Querrichtung auftretende Betriebskräfte vom Schneideinsatz über die Sitzauflage in den scheibenförmigen Grundkörper eingeleitet wird. Auch bei dieser Ausführungsform stabilisiert der obenstehend beschriebene Hinterschnitt zwischen der Sitzanlage und der stirnseitigen Kontur des Schneideinsatzes das Zusammenwirken zwischen Schneideinsatz und Grundkörper des erfindungsgemäßen Scheibenwerkzeugs.

Es kann zweckmäßigerweise sein, an der Sitzauflage und/oder der Sitzanlage des Sitzes am Grundkörper im Bereich des Schenkelübergangs eine Freinehmung vorzusehen. Besonders zweckmäßig ist es wenn diese Freinehmung im Wesentlichen im Bereich der Sitzauflage angeordnet ist, so dass der die stirnseitige Anlagefläche festlegende Endabschnitt des Schneideinsatzes in diesem Abschnitt keinen Kontakt zur Sitzauflage aufweist.

Zweckmäßigerweise kann vorgesehen sein, dass eine stirnseitige Anlagefläche des Schneideinsatzes und die dieser gegenüberliegende Begrenzungsfläche zumindest abschnittsweise parallel zueinander verlaufen, insbesondere zur grundsätzlichen Bildung eines Parallelepipeds bei welchem sowohl die Seitenflächen als auch die Stirnseitenflächen zumindest überwiegend parallel zueinander verlaufen.

Zweckmäßigerweise kann vorgesehen sein, dass die der Anlagefläche des Schneideinsatzes gegenüberliegende Stirnseite ebene Abschnitte aufweist, die parallel zum Radiusvektor des Scheibenwerkzeugs angeordnet sind.

Um eine Anpressung des Schneidelements im Bereich der stirnseitigen Anlagefläche an die Sitzanlage des jeweiligen Sitzes bereitzustellen, kann vorgesehen sein, dass die Achse der Gewindebohrung im scheibenförmigen Grundkörper zur Achse der Durchgangsbohrung des Schneidelements geringfügig versetzt ist, insbesondere in tangentialer Richtung zum Scheibenwerkzeug, wodurch der Hinterschnitt zwischen Schneideinsatz und Sitz in Bezug auf eine Richtung parallel zur Gewindebohrung in allen Betriebssituationen beibehalten werden kann.

Wie obenstehend erläutert, können bei hohen Schnitt- oder Fräsgeschwindigkeiten durch die Erfindung lange Standzeiten des Werkzeuges erzielt werden. Darüber hinaus können mit dem erfindungsgemäßen Scheibenwerkzeug unter Umständen die Schnitt- bzw. Fräsgeschwindigkeiten erhöht und somit der Durchsatz verbessert werden. In der Regel weist der Schneideinsatz im Bereich der zumindest einen Schneidkante ein Mittel zur Spanaufteilung, beispielsweise in Form zumindest einer Spanteilerrille auf, sodass die Bruchgefahr an der Schneidkante durch Kerbwirkung vergrößert ist, insbesondere bei der lokal höheren Belastung des jeweiligen, am Schneidwerkzeug folgenden Schneideinsatzes durch die doppelte Spanstärke im Bereich der in der Schneidkante eingebrachten Rille des am Schneidwerkzeug vorhergehenden Schneideinsatzes. Insbesondere bei erhöhter Schneidgeschwindigkeit erhöht sich der Verschleiß an den Schneideinsätzen. Darüber hinaus können ein erhöhter Umformungsgrad des Spanes als auch ein erhöhter Werkzeugvorschub höhere Schnitt- und Zerspankräfte bewirken, welche über die Schneideinsätze auf den jeweiligen Sitz am scheibenförmigen Grundkörper prozesssicher aufgenommen werden müssen. Folglich entstehen mit fortschreitendem, insbesondere unsymmetrischem Verschleiß und darüber hinaus mit dem Auftreten unsymmetrischer Materialausbrüche im Bereich der Schneidkante noch höhere aufzunehmende Quer- bzw. Axialkräfte. Um insofern die erfindungsgemäße Gestaltung des Sitzes des Schneideinsatzes im scheibenförmigen Grundkörper über den beschriebenen Hinterschnitt optimal, insbesondere für hohe Vorschubgeschwindigkeiten bzw. Drehzahlen des Scheibenwerkzeuges zu nutzen, kann zweckmäßigerweise vorgesehen sein, auf eine ansonsten übliche Spanteilerrille am Schneideinsatz zu verzichten und stattdessen unterhalb der Schneidkante, an der vorderseitigen Stirnfläche des Schneideinsatzes eine Vertiefung zur Spanumformung zu gestalten. Es kann vorgesehen sein, dass sich die Vertiefung, insbesondere in Form einer Mulde, in Querrichtung über mehr als zwei Drittel der Länge der Schneidkante bzw. Schneidkanten erstreckt. Darüber hinaus können auch mehrere, an der vorderseitigen Stirnfläche angeordnete Vertiefungen bzw. Mulden vorgesehen sein, welche z.B. über Stege, die sich von dem Boden der Vertiefung bzw. Mulde bis auf die vorderseitige Stirnfläche erstrecken, voneinander getrennt sind. Zweckmäßigerweise kann sich die gesamte Fläche der Vertiefung bzw. Mulde über mindestens ein Drittel der vorderseitigen Stirnfläche des Schneideinsatzes erstrecken.

Die Erfindung wird im Folgenden unter Bezugnahme auf die beiliegenden Figuren durch das Beschreiben einer Ausführungsform und diesbezüglicher Varianten erläutert, wobei
- Figur 1: in einer Seitenansicht im Ausschnitt ein erfindungsgemäß ausgebildetes Scheibenwerkzeug 1 vor der Montage der Schneideinsätze 50,
- Figur 2: eine vergrößerte Ansicht eines Bereichs des in Figur 1 gezeigten Scheibenwerkzeugs 1,
- Figur 3: eine Stirnseitenansicht des Details der Figur 2 entgegen der Drehrichtung in tangentialer Richtung zum Scheibenwerkzeug 1,
- Figur 4: in einer Detailansicht eines erfindungsgemäßen Scheibenwerkzeugs 1 gemäß Figur 1 zur Darstellung eines Schneideinsatzes 50, einer Befestigungsschraube 70 sowie eines zugeordneten Sitzes 10 im scheibenförmigen Grundkörper in einer Explosionsdarstellung,
- Figur 5: das Detail gemäß Figur 4 in einer Explosionsdarstellung in tangential zum Scheibenwerkzeug 1 entgegengesetzter Richtung,
- Figur 6: in einer Seitenansicht die Anlage des Schneideinsatzes 50 im zugeordneten Sitz des Scheibenwerkzeuges 1, und
- Figur 7: in einer perspektivischen Ansicht eine weitere Ausführungsform eines Schneideinsatzes 50' zur Gestaltung eines erfindungsgemäßen Scheibenwerkzeugs
zeigt.

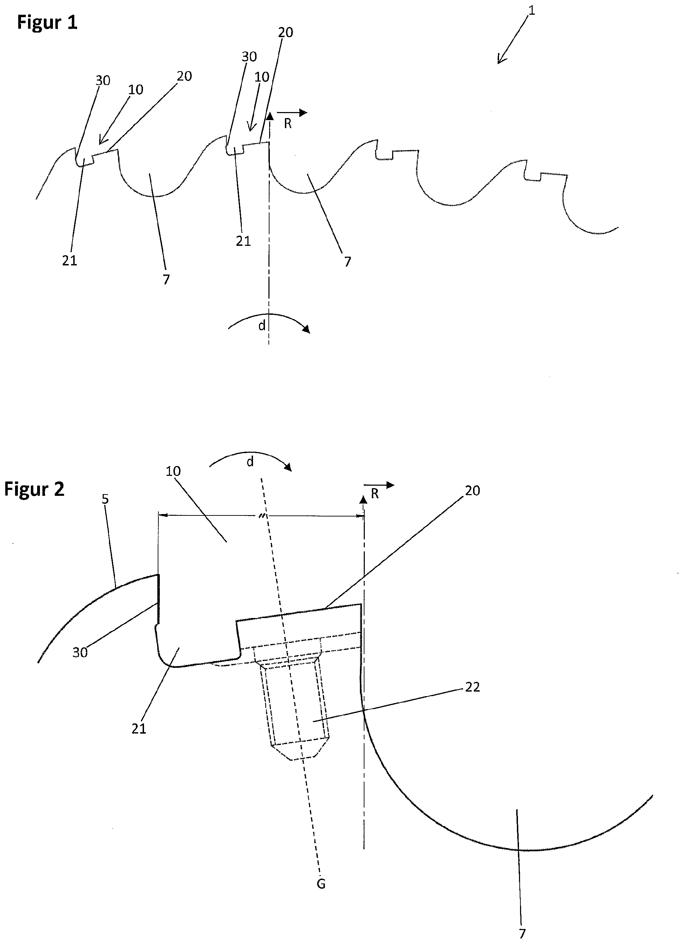

Figur 1 stellt eine Seitenansicht auf ein erfindungsgemäß gestaltetes Scheibenwerkzeug 1 zum Schneiden von Metallteilen im Ausschnitt dar, bei dem an einem scheibenförmigen Grundkörper im Bereich seiner Mantelfläche 5 eine Mehrzahl von umfänglich durch jeweils einen Spanraum 7 beabstandete, im Wesentlichen L-förmig ausgesparte Sitze 10 angeordnet sind, in welchen jeweils ein Schneideinsatz 50 mit prismatischer Grundform eingesetzt wird. In der Figur ist die Drehrichtung *̅d̅*̅ sowie in Bezug auf einen der dargestellten vier Sitze 10 ein Radiusvektor *̅R̅*̅ angegeben, der in der beschriebenen Ausführungsform an der in Drehrichtung *̅d̅*̅ vorderen Fläche des Sitzes 10, deren Normale etwa tangential zum scheibenförmigen Grundkörper verläuft, anliegt bzw. zu dieser Fläche parallel verläuft. Jeder Sitz 10 ist im Wesentlichen L-förmig ausgebildet, wobei an einem Schenkel eine Sitzauflage 20 für einen nicht dargestellten Schneideinsatz 50 und der andere Schenkel eine Sitzanlage 30 bereitstellt zur formschlüssigen Anlage des Schneideinsatzes 50 am scheibenförmigen Grundkörper.

Je nach Ausführungsform können die beiden Schenkel des etwa L-förmig ausgesparten Sitzes 10 einen Winkel im Bereich zwischen etwa 87° und 70°, insbesondere einen Winkel im Bereich etwa zwischen 85° bis 75° aufweisen.

Wie aus Figur 1 ersichtlich weist der Sitz 10 im Bereich der Schenkelübergänge zwischen der Sitzauflage 20 und der Sitzanlage 30 eine Freinehmung 21 auf, die sich in der angegebenen Ausführungsform im Wesentlichen im Bereich der Sitzauflage 20 erstreckt.

Figur 2 zeigt eine vergrößerte Ansicht eines Sitzes 10 zusammen mit dem zugeordneten Spanraum 7. Die Anlage 30 des Sitzes 10 stellt in der beschriebenen Ausführungsform eine zumindest abschnittsweise ebene Anlagefläche 31 bereit, die in der dargestellten Ausführungsform in einer Ebene senkrecht zur Scheibenebene liegt und parallel zum Radiusvektor *̅R̅*̅ an der in Drehrichtung *̅d̅*̅ vorderen Begrenzung der Sitzauflage 20.

Eine Gewindebohrung 22 ist vorgesehen in die Sitzauflage mit einer Achse G, die hier in der Ebene des scheibenförmigen Grundkörpers verläuft, wobei die Achse G der Gewindebohrung mit dem Radiusvektor *̅R̅*̅ am drehrichtungsseitigen Ende des Sitzes 10 einen vorgegebenen Winkel aufweist, der je nach Ausführungsform zwischen 4° und 30° beträgt.

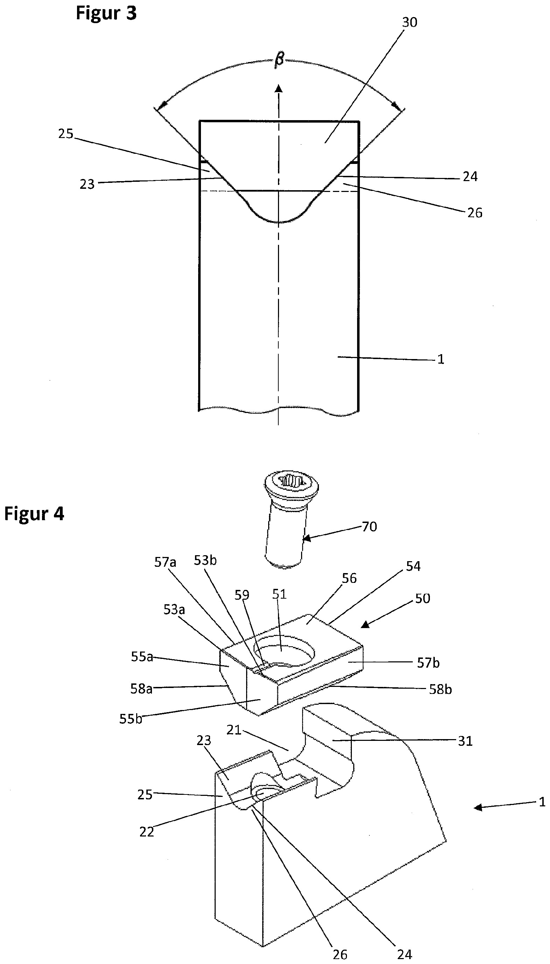

Figur 3 zeigt das Detail der Figur 2 in einer Stirnseitenansicht entgegen der Drehrichtung *̅d̅*̅ des Scheibenwerkzeuges 1 auf dem Sitz 10, siehe Figur 2. Erkennbar wird die Sitzauflage 20 durch zwei ebene Flächen 23, 24 gebildet, die innere Begrenzungsflächen von Randerhebungen 25, 26 darstellen, wobei diese Randerhebungen 25, 26 eine in Drehrichtung *̅d̅*̅ offene Tasche zur Aufnahme eines Schneideinsatzes bereitstellen. In der beschriebenen Ausführungsform weisen die beiden Auflageflächen 23, 24 einen Winkel β von etwa 90° auf, dieser kann je nach Ausführungsform etwa zwischen 140° und 60° betragen.

Figur 4 zeigt in einer Explosionsdarstellung und einer perspektivischen Ansicht einen Sitz 10 mit einem zugehörigen Schneideinsatz 50, der mittels des Schraubbolzens 70 im zugehörigen Sitz 10 mit dem scheibenförmigen Grundkörper verschraubbar ist.

Die Randerhebungen 25, 26 der Sitzauflage 20 bilden innenseitig Auflageflächen 23, 24, die hier eben sind und eine keilförmige oder V-förmige Aufnahme bereitstellen. Die Sitzauflage 20 ist im Bereich des Übergangs zur Sitzanlage 30 freigestellt, so dass eine sich über die gesamte Dicke des scheibenförmigen Grundkörpers erstreckende Freinehmung 21 gebildet ist. Die Sitzanlage 30 wird in der beschriebenen Ausführungsform durch eine hier ebene Sitzanlagefläche 31 gebildet.

Der Schneideinsatz 50 weist eine prismatische Grundform auf mit hier zwei Schneidkanten 53a, 53b sowie einer unteren Kontur, die mit den beiden Sitzauflageflächen 23, 24 zusammenwirkt zum formschlüssigen Halten des Schneideinsatzes 50 im jeweiligen Sitz 10, so dass in Querrichtung auf den Schneideinsatz 50 auftretende Schneidkräfte vom jeweiligen Sitz 10 aufnehmbar sind. Hierzu weist die untere Kontur des Schneideinsatzes 50 im Querschnitt senkrecht zur Scheibenebene einen etwa V-förmigen Querschnitt auf, wobei zwei ebene Keilflächen 58a, 58b den Schneideinsatz 50 begrenzen mit welchen dieser auf den beiden Auflageflächen 23, 24 des Sitzes anliegt. In der beschriebenen Ausführungsform weisen die zwei Keilflächen 58a, 58b einen Winkel von etwa 90° auf.

In einer nicht dargestellten Ausführungsform kann der Schneideinsatz auch eine prismatische Grundform aufweisen mit einer einzelnen Schneidkante oder mit mehr als zwei Schneidkanten.

Gegenüberliegend zur Unterseite des Schneideinsatzes 50 mit prismatischer Grundform ist in der beschriebenen Ausführungsform eine im Wesentlichen ebene Oberseite 56 gestaltet, wobei sich zwischen dieser Oberseite 56 und der Unterseite des Schneideinsatzes 50 eine abgesenkte Durchgangsbohrung 51 erstreckt. Eine sich in der Scheibenebene verlaufende Rille ist als Spanteiler 59 an der Oberseite 56 des Schneideinsatzes 50 vorgesehen. In der beschriebenen Ausführungsform ist die Spanteilerrille von, auf dem Scheibenwerkzeug umfänglich benachbarte Schneideinsätze wechselseitig links bzw. rechts von der Mitte des Scheibenwerkzeuges (in Querrichtung) angeordnet. Dabei sind auch Gestaltungen von Schneideinsätze möglich, die einen Spanteiler mit doppelter oder vierfacher oder noch mehr Spanteilerrillen aufweisen.

In der beschriebenen Ausführungsform sind die beiden Seitenflächen 57a, 57b im Wesentlichen parallel zueinander verlaufend und eben ausgebildet. Um ein Verklemmen des jeweiligen Schneideinsatzes im Schneidgut zu vermeiden, können die Seitenflächen sowohl in tangentialer Richtung als auch in radialer Richtung einen Freiwinkel von z.B. 1° - 2° aufweisen, sodass ein Schneideinsatz in Bezug auf die Seitenflächen in radialer und tangentialer Richtung leicht konisch gestaltet ist.

Durch das Platzieren des Schneideinsatzes 50 im zugeordneten Sitz 10 ist die Durchgangsbohrung 51 im Wesentlichen zur Gewindebohrung 22 des Sitzes 10 ausgerichtet, so dass durch das Hindurchführen des Schraubbolzens 70 durch die Durchgangsbohrung 51 im Schneideinsatz 50 und dem Einschrauben des Schraubbolzens 70 in die Gewindebohrung 22 der Schneideinsatz 50 lösbar am Scheibenwerkzeug 1 befestigt ist. Dabei liegt die hinterstirnseitige Anlagefläche 54 des Schneideinsatzes 50 an der Sitzanlagefläche 31 des Sitzes 10 an. In der beschriebenen Ausführungsform sind die beiden zusammenwirkenden Anlageflächen 54 und 31 eben ausgebildet.

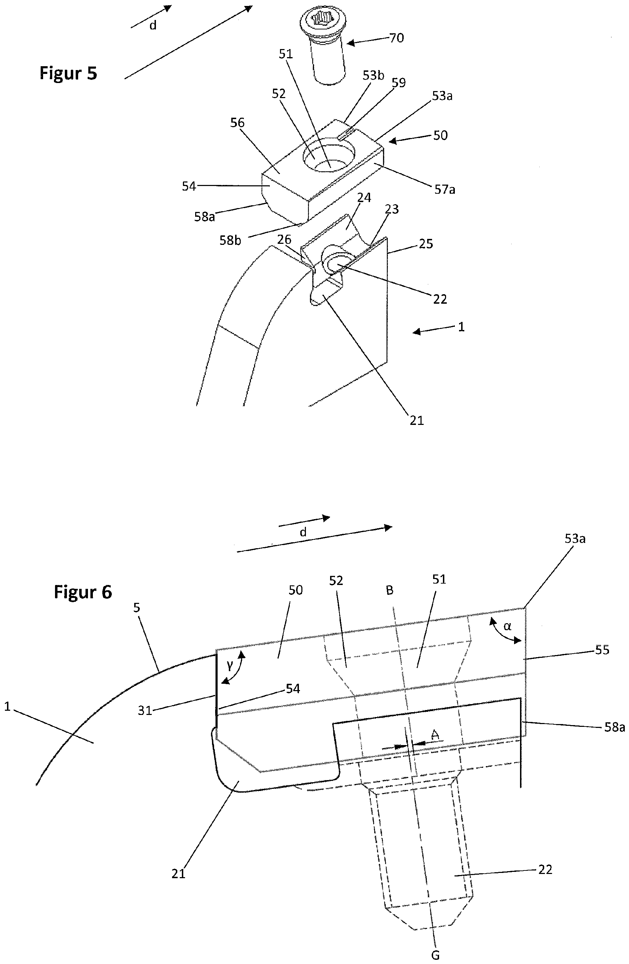

Figur 5 stellt eine ähnliche Darstellung wie die der Figur 4 dar, wobei hier die Blickrichtung nicht entgegen, sondern in Drehrichtung *̅d̅*̅ des Scheibenwerkzeuges 1 verläuft.

Figur 6 entspricht der Seitenansicht gemäß Figur 2, wobei zusätzlich der Schneideinsatz 50 in dem Sitz 10 eingesetzt ist. Zur Klarstellung der Darstellung ist in der in Figur 6 gezeigten Situation die Schraube 70 zur Befestigung des Schneideinsatzes 50 im Sitz 10 weggelassen. Erkennbar ist die Achse B der Durchgangsbohrung 51 des Schneideinsatzes 50 geringfügig in der Scheibenwerkzeugebene in Richtung der vorderseitigen Stirnfläche 55 um den Abstand A versetzt zur Achse G der Gewindebohrung 22 des Sitzes 10. Dadurch erfolgt beim Einschrauben des Befestigungsbolzens 70, siehe Figuren 4, 5, eine elastische Anpressung der hinterstirnseitigen Anlagefläche 54 des Schneideinsatzes 50 gegen die Sitzanlagefläche 31 durch das Vordrücken des Schneideinsatzes 50 entgegen der Drehrichtung *̅d̅*̅ des Scheibenwerkzeuges 1.

In der beschriebenen Ausführungsform ist der Schneideinsatz 50 mit prismatischer Grundform ausgebildet, bei welchem die Seitenflächen 57a, 57b eben und wie oben beschrieben im Wesentlichen parallel zueinander verlaufen, darüber hinaus auch die hinterstirnseitige Anlagefläche 54 sowie die vorderseitige Stirnfläche 55. Zur Gestaltung eines Freiwinkels für die Schneidkanten 53a, 53b beträgt der in Figur 6 angegebene Winkel α je nach Ausführungsform zwischen 85° und 77°. In entsprechender Weise beträgt der Winkel γ je nach Ausführungsform zwischen 95° und 103°. Wie insbesondere aus Figur 6 hervorgeht, weist der Schneideinsatz 50 im Bereich seines hinterstirnseitigen Endes zur Sitzanlage einen Hinterschnitt auf, der besonders wirksam ist bei auf dem Schneideinsatz 50 unsymmetrisch wirkenden Kräften, insbesondere Kräften, die in Querrichtung zum Scheibenwerkzeug 1 wirken. Derartige Kräfte können beispielsweise durch unsymmetrischen Verschleiß und/oder unsymmetrische Ausbrüche im Bereich der Schneidkanten 53a, 53b entstehen, wobei die hierdurch verursachten Querkräfte letztlich zum Lösen bzw. Brechen des Schneideinsatzes 50 führen können. Durch den gestalteten Hinterschnitt zwischen dem Schneideinsatz 50 und der Sitzanlage 30 in Richtung der Achse G der Gewindebohrung 22 erreicht die Erfindung eine besonders wirksame Fixierung des Schneideinsatzes 50 im Sitz 10.

In einer nicht dargestellten Ausführungsform können Sitzanlage und zugeordnete Anlagefläche des Schneideinsatzes auch jeweils keilförmig oder konkav mit zwei benachbarten und sich insbesondere schneidenden Anlageflächen ausgebildet sein.. Demnach können die Gestaltung der Sitzanlage und die der zugeordneten Anlage des Schneideinsatzes wie die oben erläuterte Gestaltungen der Sitzanlage und der unteren Kontur der Schneideinlage ausgeführt sein. Gleichzeitig ist der beschriebene Hinterschnitt zwischen Grundkörper und Schneideinsatz im Bereich der Sitzanlage realisiert. In den beschriebenen Ausführungsformen eines erfindungsgemäßen Scheibenwerkzeuges bilden die Sitzanlage und die zugeordneten Anlageflächen des Schneideinsatzes einen Hinterschnitt in einer Richtung senkrecht zur Scheibenebene und parallel zur Achse der Gewindebohrung.

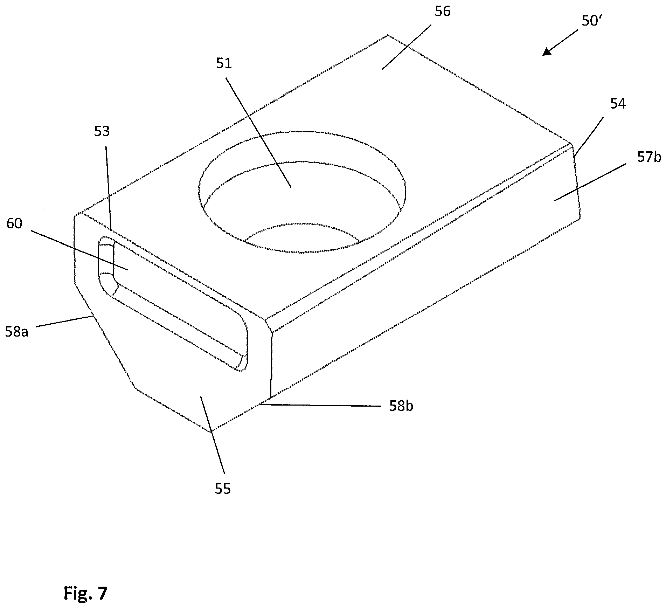

Figur 7 zeigt in einer perspektivischen Ansicht eine weitere Ausführungsform eines Schneideinsatzes 50' zur Gestaltung eines erfindungsgemäßen Scheibenwerkzeugs. Der Schneideinsatz 50' ist im Wesentlichen wie der in Figur 4 angegebene Schneideinsatz 50 aufgebaut, insbesondere weist er eine prismatische Grundform auf mit einer unteren Kontur, die im Querschnitt senkrecht zur Scheibenebene etwa V-förmig ist, wobei zwei ebene Keilflächen 58a, b den Schneideinsatz nach unten begrenzen, mit welchen dieser auf den beiden Auflageflächen 23, 24 des Sitzes anliegt, siehe Figur 4. Auch die hinterstirnseitige Anlagefläche 54 des Schneideinsatzes 50' ist wie die des Schneideinsatzes 50 an die Sitzanlagefläche 31 des Sitzes 10 angepasst, wobei Schneideinsatz 50' und der entsprechende Sitz einen Hinterschnitt bilden, wie er obenstehend mit Bezug auf Figur 6 für den Schneideinsatz 50 beschrieben ist.

Ein Unterschied in der Gestaltung des Schneideinsatzes 50' zum Schneideinsatz 50 besteht darin, dass keine Spanteilerrille die Schneidkante 53 unterbricht, wobei in der Ausführungsform gemäß Figur 7 der Schneideinsatz 50' eine einzelne, gerade Schneidkante 53 aufweist. Direkt unterhalb der oder benachbart zur Schneidkante 53 an der vorderseitigen Stirnfläche 55, die in der beschriebenen Ausführungsform als einzelne, ebene Fläche gestaltet ist, ist eine wannenartige Vertiefung 60 mit hier rechteckförmiger Grundfläche vorgesehen. Die langen Seiten der Vertiefung verlaufen dabei etwa parallel zur Schneidkante 53. Diese Vertiefung kann im Betrieb eine Spanumformung verursachen, wodurch die im Betrieb häufig im Bereich der Spanteilerrille auftretenden Materialausbrüche durch den Wegfall dieser Rille(n) vermieden werden können. Ein Scheibenwerkzeug, das mit dem in Figur 7 angegebenen Schneideinsatz 50' bestückt ist, ermöglicht insofern eine noch höhere Schnitt- und/oder Vorschubgeschwindigkeit im Vergleich zu dem mit Bezug auf die Figuren 1 - 6 erläuterten erfindungsgemäßen Scheibenwerkzeug 1.

### Bezugszeichenliste

- 1: Scheibenwerkzeug
- 5: Mantelfläche
- 7: Spanraum
- 10: Sitz
- 20: Sitzauflage
- 21: Freinehmung
- 22: Gewindebohrung
- 23, 24: Auflagefläche
- 25, 26: Randerhebung
- 30: Sitzanlage
- 31: Sitzanlagefläche
- 50, 50': Schneideinsatz
- 51: Durchgangsbohrung
- 52: Absenkung
- 53, 53a, 53b: Schneidkante
- 54: Hinterstirnseitige Anlagefläche
- 55, 55a, 55b: Vorderseitige Stirnfläche
- 56: Oberseite
- 57a, 57b: Seitenfläche
- 58a, 58b: Untere Anlagefläche/Keilfläche
- 59: Spanteiler
- 60: Vertiefung, Mulde
- 70: Schraubbolzen
- α, γ: Prismenwinkel
- β: Keilwinkel
- A: Abstand
- B: Achse der Durchgangsbohrung
- *̅d̅*̅: Drehrichtung
- G: Gewindebohrachse
- *̅R̅*̅: Radiusvektor

## Patentansprüche

1. Scheibenwerkzeug (1), insbesondere Scheibenfräser oder Scheibensäge mit
- einem scheibenförmigen Grundkörper, der im Bereich seiner Mantelfläche (5)
- eine Mehrzahl von umfänglich beabstandeten, etwa L-förmig ausgesparten Sitzen (10) aufweist, jeweils mit einer an einem Schenkel des L-förmigen Sitzes (10) angeordneten Sitzauflage (20) und einer, an dem anderen Schenkel des L-förmigen Sitzes angeordneten Sitzanlage (30) zur formschlüssigen Aufnahme
- eines jeweiligen Schneideinsatzes (50) mit quaderförmiger oder prismatischer Grundform, umfassend zumindest eine Schneidkante (53a, 53b) und eine untere Kontur, die mit zumindest einer Sitzauflagefläche des Sitzes (10) zusammenwirkt und eine stirnseitige Kontur, die mit zumindest einer Sitzanlagefläche des Sitzes (10) zusammenwirkt zum formschlüssigen Halten des Schneideinsatzes (50) im jeweiligen Sitz (10), sodass quer auf den Schneideinsatz (50) auftretende Schneidkräfte vom jeweiligen Sitz (10) aufnehmbar sind, wobei die Sitzanlagefläche (31) des Sitzes (10) und eine stirnseitige Anlagefläche der stirnseitigen Kontur des Schneideinsatzes (50) im Bereich der gegenseitigen Anlage als ebene Flächen ausgebildet sind, und wobei der jeweilige Schneideinsatz (50) eine zwischen der unteren Kontur und einer zu dieser gegenüberliegenden oberen Fläche verlaufende Durchgangsbohrung aufweist zur Aufnahme eines Befestigungsbolzen, der in eine zugeordnete Gewindebohrung (22) im scheibenförmigen Grundkörper lösbar eingeschraubt ist, **dadurch gekennzeichnet, dass** der Schneideinsatz (50) im Bereich der stirnseitigen Kontur mit dem Sitz (10) im Bereich der Sitzanlagefläche (31) in Richtung zur Achse der Gewindebohrung (22) des Grundkörpers und parallel zur Scheibenebene einen Hinterschnitt bildet.

2. Scheibenwerkzeug (1) nach Anspruch 1, **dadurch gekennzeichnet, dass** die Gewindebohrung (22) einen Winkel zum Radiusvektor des scheibenförmigen Grundkörpers am radialen äußeren Ende der Gewindebohrung zwischen 4° und 14° aufweist.

3. Scheibenwerkzeug (1) nach Anspruch 1 oder 2, **dadurch gekennzeichnet, dass** eine Parallele zur Achse der Gewindebohrung (22) im Grundkörper mit der Sitzanlagefläche (31) einen Winkel zwischen 4° und 14° bildet.

4. Scheibenwerkzeug (1) nach einem der Ansprüche 1 bis 3, **dadurch gekennzeichnet, dass** die untere Kontur des jeweilige Schneideinsatzes (50) im Querschnitt senkrecht zur Scheibenebene V- bzw. U-förmig zur Ausbildung zumindest einer unteren Anlagefläche ausgebildet ist.

5. Scheibenwerkzeug (1) nach Anspruch 4, **dadurch gekennzeichnet, dass**
die untere Kontur zwei ebene Keilflächen als untere Anlageflächen umfasst, deren Ebenen sich in einer Linie schneiden, die hinter einer unteren Begrenzungsfläche des jeweiligen Schneideinsatzes (50) liegt.

6. Scheibenwerkzeug (1) nach Anspruch 4 oder 5, **dadurch gekennzeichnet, dass** die Sitzanlage (30) des Sitzes (10) im Querschnitt senkrecht zur Scheibenebene eine Randerhebung (25, 26) aufweist.

7. Scheibenwerkzeug (1) nach einem der Ansprüche 1 bis 6, **dadurch gekennzeichnet, dass** die Sitzauflage (20) und/oder Sitzanlage (30) des Sitzes (10) im Bereich des Schenkelübergangs des Sitzes (10) eine Freinehmung (21) aufweist.

8. Scheibenwerkzeug (1) nach einem der Ansprüche 1 bis 7, **dadurch gekennzeichnet, dass** eine stirnseitige Anlagefläche (54) und die dieser gegenüberliegende Begrenzungsfläche des jeweiligen Schneideinsatzes (50) zumindest abschnittsweise parallel zueinander verlaufen.

9. Scheibenwerkzeug (1) nach Anspruch 8, **dadurch gekennzeichnet, dass** die der stirnseitigen Anlagefläche (54) gegenüberliegende Begrenzungsfläche des jeweiligen Schneideinsatzes (50) parallel zu einem Radiusvektor (R) des Scheibenwerkzeuges (1) verläuft.

10. Scheibenwerkzeug (1) nach einem der Ansprüche 1 bis 9, **dadurch gekennzeichnet, dass** zur Anpressung des Schneideinsatzes (50) an die Sitzanlage (30) des jeweiligen Sitzes (10) die Achse (G) der Gewindebohrung (22) im scheibenförmigen Grundkörper zur Achse (B) der Durchgangsbohrung (51) geringfügig versetzt ist.

11. Scheibenwerkzeug (1) nach einem der Ansprüche 1 bis 10, **dadurch gekennzeichnet, dass** der Schneideinsatz (50') unterhalb der Schneidkante (53), an der vorderseitigen Stirnfläche (55) eine Vertiefung (60) aufweist.

## Claims

1. Disk tool (1), in particular disk milling cutter or disk saw with
- a disk-shaped basic body that has in the area of its circumferential surface (5)
- a multitude of circumferentially spaced, approximately L-shaped recessed seats (10), respectively with a seat top (20) placed on a leg of the L-shaped seat (10) and a seat bearing (30) placed on the other leg of the L-shaped seat for a form-fitting receiving
- of a respective cutting insert (50) with a parallelepipedal or prismatic basic shape comprising at least one cutting edge (53a, 53b) and a lower contour that interacts with at least one seat top surface of the seat (10) and a frontal contour that interacts with at least one seat bearing surface of the seat (10) for the positive retaining of the cutting insert (50) in the respective seat (10) so that cutting forces arising transversely onto the cutting insert (50) can be absorbed by the respective seat (10), wherein the seat bearing surface (31) of the seat (10) and a frontal bearing surface of the frontal contour of the cutting insert (50) are designed as flat surfaces in the area of the mutual contact and wherein the respective cutting insert (50) has a through bore extending between the lower contour and an upper surface opposed thereto for receiving a fastening bolt that is removably screwed into an associated threaded bore (22) in the disk-shaped basic body, **characterized in that** the cutting insert (50) forms an undercut in the area of the frontal contour with the seat (10) in the area of the seat bearing surface (31) in direction of the axis of the threaded bore (22) of the basic body and parallel to the disk plane.

2. Disk tool (1) according to claim 1, **characterized in that** the threaded bore (22) has an angle between 4° and 14°with the radius vector of the disk-shaped basic body at the radial outer end of the threaded bore.

3. Disk tool (1) according to claim 1 or 2, **characterized in that** a parallel to the axis of the threaded bore (22) in the basic body forms an angle between 4° and 14° with the seat bearing surface (31).

4. Disk tool (1) according to one of the claims 1 to 3, **characterized in that** the lower contour of the respective cutting insert (50) is designed V-shaped or U-shaped in the cross-section perpendicularly to the disk plane for forming at least one lower bearing surface.

5. Disk tool (1) according to claim 4, **characterized in that** the lower contour comprises two flat wedge surfaces as lower bearing surfaces, the planes of which intersect in a line that is situated behind a lower boundary surface of the respective cutting insert (50).

6. Disk tool (1) according to claim 4 or 5, **characterized in that** the seat bearing (30) of the seat has an elevated edge (25, 26) in the cross-section perpendicularly to the disk plane.

7. Disk tool (1) according to one of the claims 1 to 6, **characterized in that** the seat top (20) and/or the seat bearing (30) of the seat (10) has a clearance space (21) in the area of the leg transition of the seat (21).

8. Disk tool (1) according to one of the claims 1 to 7, **characterized in that** a frontal bearing surface (54) and the boundary surface opposed thereto of the respective cutting insert (50) extend at least in sections parallel to each other.

9. Disk tool (1) according to claim 8, **characterized in that** the boundary surface opposed to the frontal bearing surface (54) of the respective cutting insert extends parallel to a radius vector (R) of the disk tool (1).

10. Disk tool (1) according to one of the claims 1 to 9, **characterized in that** for pressing the cutting insert (50) to the seat bearing (10), the axis (G) of the threaded bore (22) in the disk-shaped basic body is slightly offset to the axis (B) of the through bore (51).

11. Disk tool (1) according to one of the claims 1 to 10, **characterized in that** the cutting insert (50') has a recess (60) below the cutting edge (53) on the front end face (55).

## Revendications

1. Outil à disque (1), en particulier fraiseuse à disque ou scie à disque, avec
- un corps de base en forme de disque qui présente, dans la zone de sa surface d'enveloppe (5),
- une multitude de sièges (10) espacés sur la circonférence, évidés approximativement en forme de L, respectivement avec un dessus de siège (20) placé sur un montant du siège en forme de L (10) et un appui de siège (30) placé sur l'autre montant du siège en forme de L pour le logement par adhérence de forme
- d'un insert de coupe respectif (50) avec une forme de base en forme de parallélépipède ou de prisme, qui comprend au moins une arête de coupe (53a, 53b) et un contour inférieur qui coopère avec au moins une surface de dessus de siège du siège (10) et un contour côté frontal qui coopère avec au moins une surface d'appui de siège du siège (10) pour le maintien par adhérence de forme de l'insert de coupe (50) dans le siège respectif (10) si bien que des forces de coupe intervenant transversalement sur l'insert de coupe (50) peuvent être absorbées par le siège respectif (10), cependant que la surface d'appui de siège (31) du siège (10) et une surface d'appui frontal du contour côté frontal de l'insert de coupe (50) sont configurées en tant que surfaces planes dans la zone de l'appui mutuel et cependant que l'insert de coupe respectif (50) présente une forure traversante qui s'étend entre le contour inférieur et une surface supérieure opposée à celui-ci pour loger un boulon de fixation qui est vissé de manière amovible dans une forure filetée associée (22) dans le corps de base en forme de disque, **caractérisé en ce que** l'insert de coupe (50) forme une contre-dépouille dans la zone du contour côté frontal avec le siège (10) dans la zone de la surface d'appui de siège (31) en direction de l'axe de la forure filetée (22) du corps de base et parallèlement au plan du disque.

2. Outil à disque (1) selon la revendication 1, **caractérisé en ce que** la forure filetée (22) présente un angle entre 4° et 14° avec le vecteur de rayon du corps de base en forme de disque à l'extrémité extérieure radiale de la forure filetée.

3. Outil à disque (1) selon la revendication 1 ou 2, **caractérisé en ce qu'**une parallèle avec l'axe de la forure filetée (22) dans le corps de base forme un angle entre 4° et 14° avec la surface d'appui de siège (31).

4. Outil à disque (1) selon l'une des revendications 1 à 3, **caractérisé en ce que** le contour inférieur de l'insert de coupe respectif (50) est configuré en forme de V ou de U en section transversale perpendiculairement au plan du disque pour former au moins une surface d'appui inférieure.

5. Outil à disque (1) selon la revendication 4, **caractérisé en ce que** le contour inférieur comprend deux surfaces cunéiformes planes comme surfaces d'appui inférieures dont les plans se coupent en une ligne qui se situe derrière une surface de délimitation inférieure de l'insert de coupe respectif (50).

6. Outil à disque (1) selon la revendication 4 ou 5, **caractérisé en ce que** l'appui de siège (30) du siège (10) présente un rehaussement de bord (25, 26) en section transversale perpendiculairement au plan du disque.

7. Outil à disque (1) selon l'une des revendications 1 à 6, **caractérisé en ce que** le dessus de siège (20) et/ou l'appui de siège (30) du siège (10) présente un espace vide (21) dans la zone de la transition des montants du siège (10).

8. Outil à disque (1) selon l'une des revendications 1 à 7, **caractérisé en ce qu'**une surface d'appui frontal (54) et la surface de délimitation opposée à celle-ci de l'insert de coupe respectif (50) sont au moins partiellement parallèles l'une à l'autre.

9. Outil à disque (1) selon la revendication 8, **caractérisé en ce que** la surface de délimitation de l'insert de coupe respectif (50) opposée à la surface d'appui frontal (54) s'étend parallèlement à un vecteur de rayon (R) de l'outil à disque (1).

10. Outil à disque (1) selon l'une des revendications 1 à 9, **caractérisé en ce que**, pour presser l'insert de coupe (50) contre l'appui de siège (30) du siège respectif (10), l'axe (G) de la forure filetée (22) dans le corps de base en forme de disque est légèrement décalé par rapport à l'axe (B) de la forure traversante (51).

11. Outil à disque (1) selon l'une des revendications 1 à 10, **caractérisé en ce que** l'insert de coupe (50') présente un renfoncement (60) en dessous de l'arête de coupe (53) sur la surface frontale côté avant (55).
